# EUROPEAN PATENT APPLICATION

(11) **EP 1 160 913 A2**
(43) Date of publication of application: **05.12.2001**
(21) Application number: 01303741.1
(22) Date of filing: 24.04.2001
(51) Int. Cl.: H01Q 1/28, H01Q 3/26, H01Q 25/00, H04B 7/185

(54) **Antenna system**

(30) Priority: 31.05.2000 GB 0013229
(71) Applicant: NOKIA MOBILE PHONES LTD., 02150 Espoo (FI)
(72) Inventor: Widley, Chris, Harpenden (GB); Kokkos, Assimakis, Maidenhead (GB); MacNamara, Ian, Reading (GB); Itkonen, Jarkko, Camberley (GB); Ojanen, Pekka, 19131 Espoo (FI); Einola, Heikki, Helsinki (FI); Vivlavaara, Asko, Helsinki (FI); Rantalainen, Timo, Helsinki (FI)
(74) Representative: Walaski, Jan Filip

(57) **Abstract**

A phased array antenna in space receives a beacon signal from an earth based beacon station at each of a plurality of antenna elements which make up the array. The beacon signal is passed to a beacon signal processor which determines the phase differences between the signal received at different antenna elements. The phase differences provide a measure of the physical displacement of the antenna elements from their nominal relative positions, due to distortion of the antenna structure resulting from, for example, gravitational forces. To correct for the effect of the displacement, phase compensation signals are generated corresponding to the phase differences and are applied to the communication signals being transmitted from and received at the antenna elements.

## Description

This invention relates to the field of antennas, particularly but not exclusively to array antennas for use in satellite communication systems.

The presently emerging second generation of satellite communication systems is characterised by the very low bit rates that are available for hand-held voice and data services. Typically, bit rates are limited to around 8kbit/s and then only when the user is within unobstructed line of sight of the spacecraft. Service quality is also affected by the unavailability of comfortable link margin, which defines a power safety margin above the minimum transmission power required to maintain the link. For example, in the absence of a reasonable link margin, service will periodically become unavailable even with relatively low levels of attenuation in the communications path, caused by conditions such as adverse weather and multipath fading effects. Increasing the link margin requires innovative approaches to satellite system design, since the user terminal has power limitations resulting from, for example, handset size constraints.

A key factor in establishing services to hand-held satellite user terminals is the diameter of the satellite transmit/receive spot beam projected on the earth's surface. In second generation satellite systems, each satellite generates a cluster of such spot beams, each spot beam generally being hundreds of kilometres in diameter, and sometimes over one thousand kilometres. Typically, the spot beams are formed in the satellite by using a single antenna, for example a direct radiating array, which provides the satellite's entire footprint on the earth's surface. This type of antenna uses a structure comprising an array of antenna elements connected to a beam forming network. The function of the beam forming network is to apply the signal to be transmitted to each antenna element with a particular amplitude and phase relationship depending on the spot beam to which the signal is to be fed. By changing these relationships, in particular the distribution of the signal phases fed to the antenna elements, the beam direction can be changed and the required spot beam selected. This antenna arrangement is known as a phased array antenna. Reference is directed to International Publication No. WO95/28747 for a more detailed discussion of phased array antennas and beam forming networks. Reference is further directed to "New Satellites for Personal Communications", John V. Evans, Scientific American, April 1998, pages 60-67, which provides an overview of second generation satellite systems.

In the next generation of satellite systems, it is envisaged that smaller spot beams will be needed to provide both increased link margin and enhanced frequency re-use, leading to greater communications capacity. Since the antenna gain can be shown to be inversely proportional to the square of the beamwidth, the smaller the beamwidth, the greater the available link margin. For example, the increase in link margin for a 50km diameter spot beam, compared to, for example, an 800km spot beam, is 24dB, which could enable the satellite quality of service to fulfil most terrestrial users' expectations. The link margin can also be spent in a number of ways to improve the coverage and service offerings. For example, in-building voice/fax services become viable, as do enhanced services outdoors or in vehicular applications, as shown in the following table:

**Table 1**

| Service | Extra Margin Required (compared to 2^{nd} generation) |
|---|---|
| Indoor voice/fax/data (2.4∼4 kbit/s) | 25dB |
| Outdoor shadowed voice/fax/data (16 kbit/s) | 25dB |
| Outdoor ISDN 2B+D (144 kbit/s) | 18dB |
| Wire Antenna Handheld (low cost) | 15dB |

Smaller spot beam diameters also greatly increase frequency re-use and thus the number of possible users that can be supported for a given spectrum allocation.

While a satellite antenna system capable of generating 50km diameter, or even smaller, spot beams is therefore clearly desirable, the difficulty lies in implementation, since decreasing the spot beam size means that the (aperture) size and gain of the satellite antenna has to be increased.

For example, for a satellite in a medium earth orbit (MEO), around 10,000km above the surface of the earth, reducing the spot beam diameter from 1000km to 100km gives an increase in link margin of 20dB at the cost of an increase in the diameter of the satellite antenna from 2 to 20m. For a corresponding satellite in a geostationary orbit (GEO), approximately 36,000km above the surface of the earth, the antenna diameter increases to about 70m.

However, increasing satellite antenna size gives rise to both mechanical and functional problems. The mechanical problem is to make the structure stable and rigid enough to be suitable for use as an antenna. For example, comparing the array structure to a parabolic antenna, the accuracy of the surface has to be less than 0.04λ - 0.08λ to keep the efficiency high. At a typical operating frequency of 2GHz, this represents a required surface accuracy of only 6-12mm. Such a high level of accuracy is difficult to achieve in space, where gravitational forces as well as extremes of temperature and temperature differences across the antenna structure can cause significant bending of the structure.

The functional problem associated with the increase in satellite antenna size relates to accurately pointing the satellite antenna to keep the footprint fixed on the earth. Accurate pointing of the antenna requires complex position keeping manoeuvres, which consume fuel and thereby reduce the lifetime of the satellite.

The problem of building phased array antennas, in particular for use on aircraft, is addressed in US Patent No. 5,623,270, Kempkes and Wiener, which describes a number of methods of compensating for the effects of antenna flexure, vibration and movement, so as to eliminate the need for massive rigid back structures to maintain antenna rigidity. In particular, position sensing means such as accelerometers are mounted in the vicinity of each antenna element and the output signals are provided to a control computer. The computer determines the relative physical position of each antenna element with respect to its nominal position relative to the other antenna elements. Phase correction signals are then generated to correct for such positional errors. In alternative disclosed embodiments, displacement of antenna elements is measured by locally mounted strain gauges, capacitive changes in locally mounted capacitive plates and other locally mounted means for measuring the flexing of the antenna supporting structure using optical techniques.

The general problem associated with the above proposed solutions is the additional expense and complexity of providing mechanical devices and measuring means in an array antenna. In a small diameter spot beam antenna having, for example, 16,000 spot beams per satellite, the number of antenna elements would need to be in the region of 10,000 to 20,000, the displacement of each of which might need to be individually measured. In addition, the substantial additional weight which such mechanical measuring elements would introduce would make the above solution entirely impracticable for a satellite antenna.

To address the above problems, there is provided, according to the present invention, an antenna system including an antenna array having a plurality of antenna elements for transmitting and receiving communication signals, and means for controlling the array to compensate for displacement of the antenna elements from their respective nominal positions relative to one another, said control means including means for determining a characteristic of a reference signal received at at least one of the plurality of antenna elements from a remote source, wherein said control means is configured to control the array in dependence on said characteristic.

Providing a reference signal from a remote source which is received at the antenna elements, eliminates the need for heavy, complex and expensive equipment associated with each antenna element. The reference signal received at each of the antenna elements can instead be routed to a central signal processor which carries out all the necessary calculation. In the case where the remote source is a beacon transmitter on the earth's surface, the geographical position of a spot beam generated by the antenna elements can be locked to the earth's surface, irrespective of errors in the antenna geometry or the satellite orientation. Fof an orbiting, as opposed to a geostationary, satellite, the movement of the beam across the earth can be stabilised in accordance with the orbital parameters.

The determination means can comprise means for comparing the signal received at a first antenna element with the signal received at a second antenna element. The characteristic being determined can be a phase difference between the signal received at the first antenna element and the signal received at the second antenna element.

The antenna system can further include means for generating a phase correction corresponding to the phase difference, which can be used in the phase control means which is provided in a phased array antenna to alter the communication signal phasing and so compensate for distortion of the array structure.

By determining the phase relationships between the plurality of antenna elements, the control means can be configured to control the radiation pattern of the antenna array in dependence on said phase relationships.

Implementation of the invention can therefore provide a self-phasing phased array in which the radiation pattern automatically adjusts to compensate for displacement of the antenna elements from their nominal positions relative to one another.

According to the invention, there is further provided a method of controlling an antenna array having a plurality of antenna elements for transmitting and receiving communication signals, to compensate for displacement of the antenna elements from their nominal positions, comprising the steps of:
determining a characteristic of a reference signal received at at least one of the plurality of antenna elements from a remote source, and controlling the array in dependence on said characteristic.

According to the invention, there is also provided a method of controlling a beam pattern generated by an antenna array having a plurality of antenna elements, comprising comparing the signals received from a remote source at each of the plurality of antenna elements and controlling the beam pattern in dependence on said comparison so as to lock the beam pattern to the remote source.

Embodiments of the invention will now be described by way of example with reference to the accompanying drawings, in which:
Figure 1 is a schematic diagram of an antenna system according to the invention, including an antenna array mounted to a satellite, an earth station, a beacon station and a handheld terminal;
Figure 2 is a schematic block diagram showing details of the components of the satellite shown in Figure 1, including the antenna array;
Figure 3 is a schematic illustration of the arrival of a beacon signal at the antenna array;
Figure 4 is a schematic block diagram showing details of a beacon signal processor according to the invention; and
Figure 5 is a flow chart illustrating the operation of the antenna system.

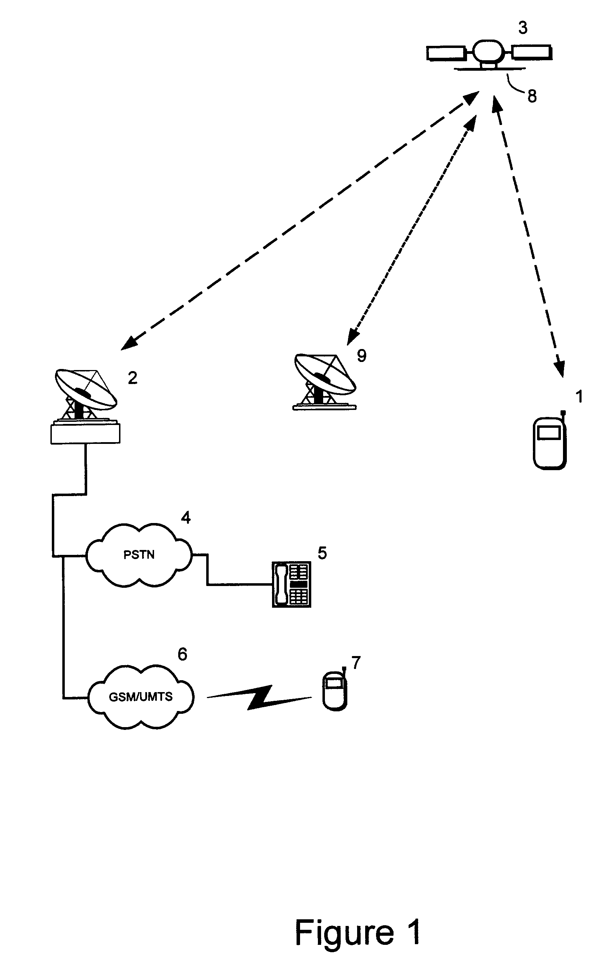

Referring to Figure 1, a mobile user terminal 1 communicates with an earth station 2 via an earth orbiting satellite 3, which is representative of a constellation of satellites providing a telecommunications service globally or over part of the earth's surface. The earth station 2 is connected to a number of terrestrial networks, including a conventional public switched telephone network (PSTN) 4 for communication with a land based telephone 5 and a terrestrial cellular network 6, for example, a GSM or UMTS (Universal Mobile Telecommunications System) network for communicating with a cellular telephone 7. The satellite 3 is, for example, configured in a 'bent-pipe' configuration to enable it fully to support different radio interface standards. The satellite 3 includes a phased array antenna 8 for receiving and transmitting signals to and from the user terminal 1 and the earth station 2. A fixed beacon station 9 on the Earth's surface provides a beacon signal receivable by the phased array antenna 8, as described in detail below. Different satellite configurations are well known: reference is for example directed to the various systems discussed in "New Satellites for Personal Communications", John V. Evans, supra.

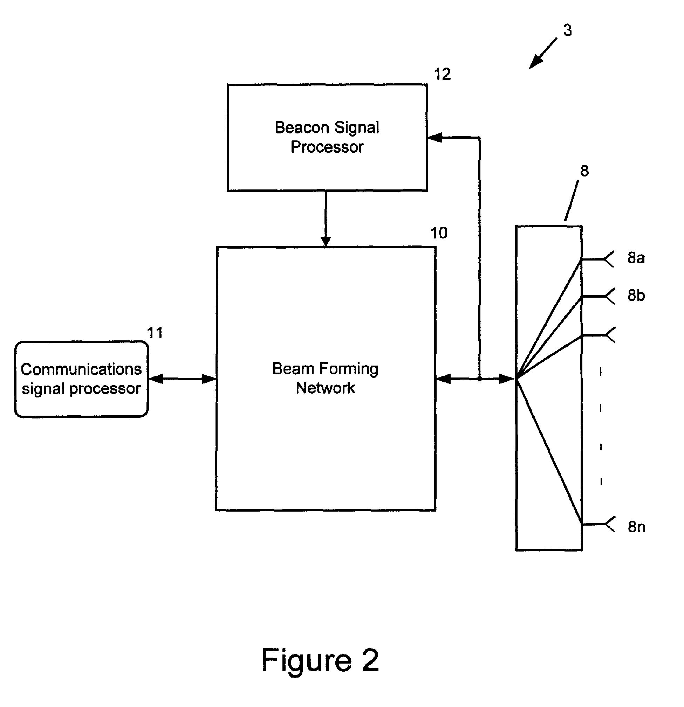

Referring to Figure 2, which shows the components of the satellite 3 in more detail, the phased array antenna 8 comprises a plurality of individual antenna elements 8a - n, for example microstrip dipoles printed on a common substrate, which are fed by a beam forming network 10. The beam forming network 10 forms individual spot beams by providing a correctly phased signal to each of the antenna elements 8a-n, for example using controllable signal splitters and phase shifters under the overall control of a communications signal processor 11. The radiation pattern is changed by changing the phase and amplitude of the signals fed to each of the antenna elements 8a - n. The antenna 8 and beam forming network 10 are configured to be used for both transmitting and receiving signals, or, in an alternative embodiment, separate antennas are used for transmit and receive functions. Reference is directed to WO95/28747, referred to above, for a more detailed discussion of beam forming networks.

The satellite 3 further comprises a beacon signal processor 12 which receives input signals from each of the antenna elements 8a - n and provides output signals to the beam forming network 10. The functionality of the beacon signal processor 12 will be described in detail below.

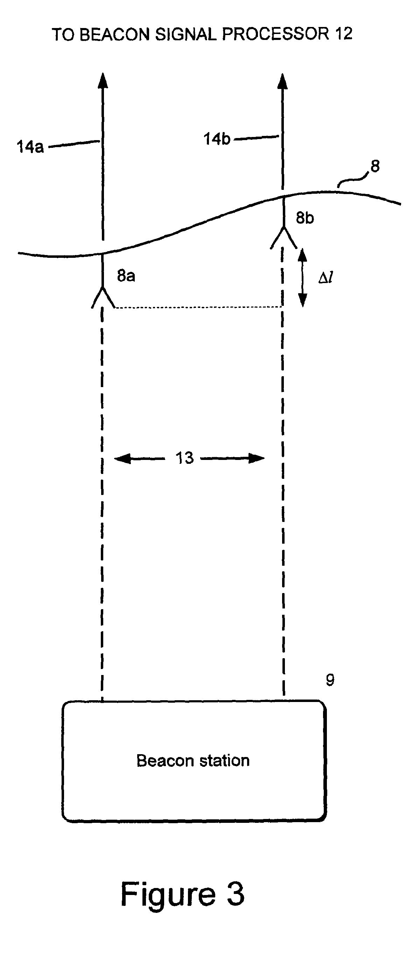

Referring to Figure 3, the beacon station 9 provides a reference signal 13, also referred to herein as a beacon signal, for example a high power carrier transmitted from a fixed point on earth to the satellite 3. The signal is powerful enough to be received by each antenna element 8a - n separately. Figure 3 schematically illustrates reception of the beacon signal 13 at each of two adjacent elements 8a, 8b of the array antenna 8. The array antenna 8 is shown to be distorted or misaligned, so that there is a path difference Δl between the component 14a of the beacon signal 13 as received at the first antenna element 8a and the component 14b of the beacon signal 13 as received at the second antenna element 8b. The beacon signal component 14a received at the first antenna element 8a and the beacon signal component 14b received at the second antenna element 8b are directed to the beacon signal processor 12 for processing. Corresponding beacon signal components 14c - 14n are received at each of the remaining antenna elements 8c - 8n and directed to the beacon signal processor 12.

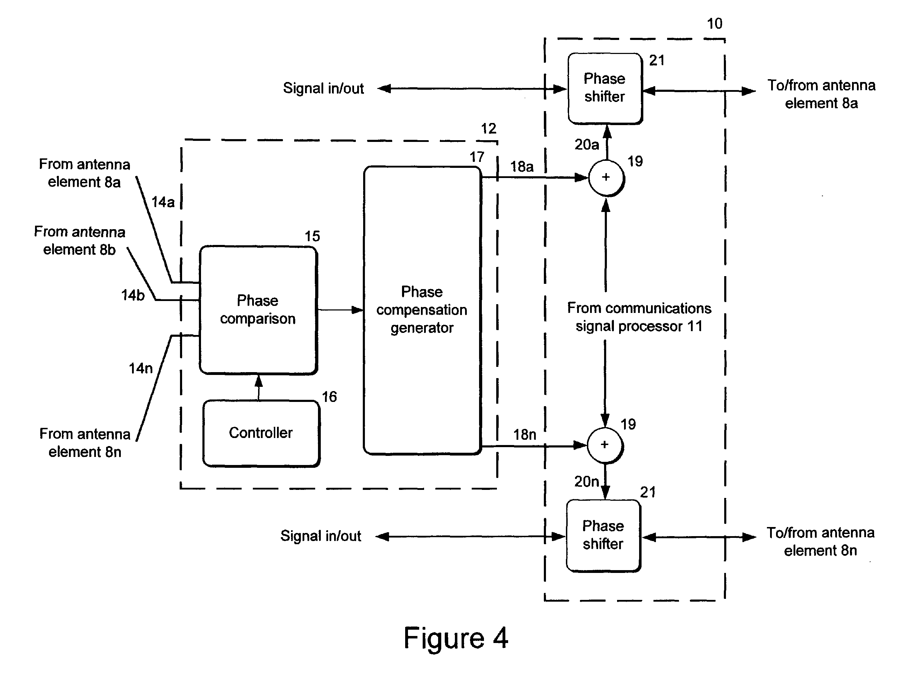

Referring to Figure 4, the beacon signal processor 12 comprises a phase comparison module 15 which compares the phases of the signal components 14a - n under the control of a phase comparison controller 16, which determines how the phase comparison is to be executed. For example, the controller 16 specifies that beacon signal phases at adjacent pairs of antenna elements 8a, 8b; 8c, 8d; 8m, 8n are to be compared, or that the beacon signal phases at all of the antenna elements are to be compared against the beacon signal phase at a specified reference antenna element. The output of the phase comparison module 15 is sent to a phase compensation generator module 17, which generates the appropriate phase corrections 18a - n to ensure that signals transmitted by or received at the antenna elements are compensated for distortions or misalignments of the array structure. The phase compensation signals 18a - n are for example input to adders 19 to be added to the phase control signals generated by the communications signal processor 11. The resulting total phase control signals 20a -n are supplied as inputs to respective phase shifters 21, so as apply the correct phase weighting to communication signals in the beam forming network 10. As an example, in the case of communication signals to be transmitted from the satellite, phase compensation is applied to ensure the relevant spot beam is directed to the correct geographical area on earth, regardless of the physical orientation of the antenna elements. In the case of communication signals received at the satellite, phase compensation is applied to ensure that the received signals are identified as coming from the correct geographical area on earth.

The beacon signal is coded to permit the beacon signal processor 12 to determine accurately the difference in the phases of the beacon signal as received at each of the antenna elements 8a - n. The required accuracy of the phase determination is dependent on the required accuracy of antenna surface alignment. The signal format is, for example, a modulated carrier signal, using modulation by a pseudorandom noise sequence (PRN), for example using a similar format to that of the signals used in the Global Positioning System (GPS). Such modulation permits determination of fractional wavelength phase differences between the signal phases of the beacon signal components received at each of the antenna elements. Reference is directed to US Patent No. 5,583,513, Cohen, C., which describes phase determination in a GPS system.

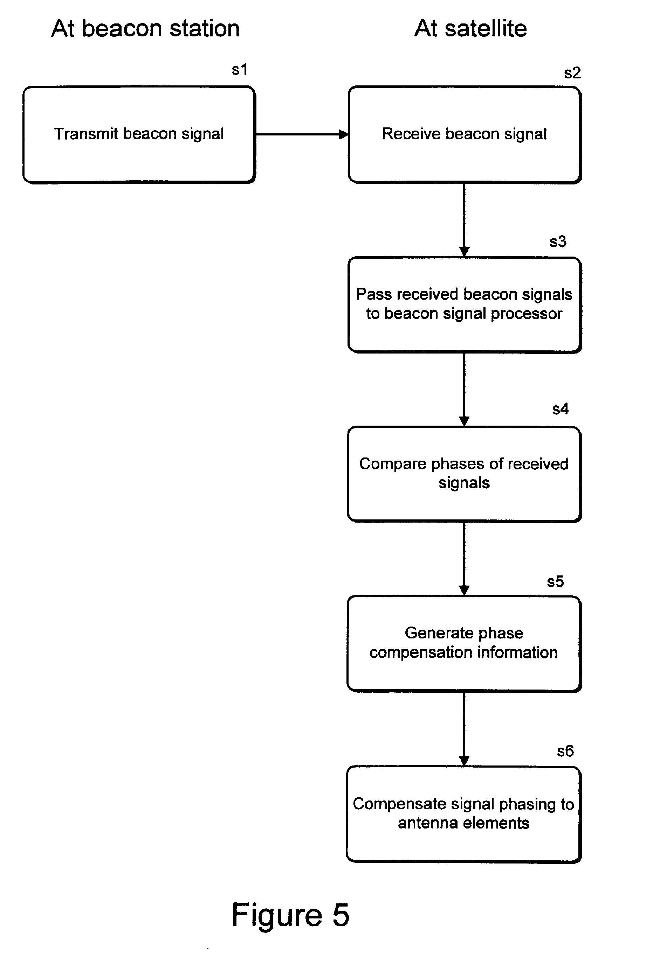

The operation of the antenna system will now be described in detail below. Referring to Figures 4 and 5, a beacon transmitter, for example the beacon station 9, transmits a beacon signal (step s1) which is received at each element 8a - 8n of the array antenna (step s2). The received signals are passed to the beacon signal processor 12 (step s3), which compares the phases of the received beacon signal at each of the antenna elements (step s4). Differences in the received signal phases indicate that the antenna elements are misaligned. Knowing the location of the beacon transmitter and the relative phase relationships between the antenna elements 8a - 8n, the beacon signal processor 12 generates appropriate phase correction information (step s5) and passes this to the beam forming network 10, which uses the compensation information to correct the phase information from the communications signal processor 11, so as to provide correctly phased communications signals to/from the antenna elements 8a - 8n (step s6). The compensation information is therefore used to compensate for any physical distortion or misalignment of the antenna elements, so that the resulting spot beams are electronically steered to point at their desired locations. The use of a fixed beacon transmitter on earth enables the geographical position of a spot beam to be locked to the location of the beacon transmitter, irrespective of errors in the satellite geometry or the satellite orientation. In the case of an orbiting satellite, the fixed beacon transmitter enables movement of the beam across the earth to be stabilised in accordance with the orbital parameters.

While the invention has been described in relation to a single beacon transmitter for the whole beam pattern of a satellite, a number of beacon transmitters can be provided, for example one per spot beam. In an alternative embodiment, the beacon transmitter is integrated with the earth station 2. In a yet further embodiment, a mobile beacon transmitter is used, allowing, for example, a beam to be locked to a ship.

Although the above antenna system has primarily been described in relation to a phased array antenna, it will be appreciated that the invention can be used with other forms of controllable array antenna. The antenna array can be a direct radiating array or a reflector array in which the feed is an array structure, which is used to form the spot beams through a large reflector antenna. Furthermore, the antenna array can be a free-floating array of antenna elements in space, and each antenna element can be a separate micro-satellite.

The antenna system has been primarily described in relation to a satellite system, but can be used in other environments, for example mounted to an aircraft or other high altitude platform, for example tropospheric balloons.

## Claims

1. An antenna system including an antenna array having a plurality of antenna elements for transmitting and receiving communication signals, and means for controlling the array to compensate for displacement of the antenna elements from their respective nominal positions relative to one another, said control means including means for determining a characteristic of a reference signal received at at least one of the plurality of antenna elements from a remote source, wherein said control means is configured to control the array in dependence on said characteristic.

2. An antenna system according to claim 1, wherein the determination means comprises means for comparing the signal received at a first antenna element with the signal received at a second antenna element.

3. An antenna system according to claim 2, wherein said characteristic comprises a phase difference between the signal received at the first antenna element and the signal received at the second antenna element.

4. An antenna system according to claim 3, further comprising means for generating a phase correction corresponding to the phase difference.

5. An antenna system according to claim 4, wherein the array control means includes phase control means for controlling the phase of the communication signals, further comprising means for operating the phase control means to implement the phase correction.

6. An antenna system according to any one of claims 3 to 5, wherein said array produces a radiation pattern, and said control means is operable to control the radiation pattern, wherein the determination means comprises means for determining the phase relationships between the plurality of antenna elements and said control means is configured to control the radiation pattern in dependence on said phase relationships.

7. A satellite system comprising a satellite having an antenna system according to any one of claims 1 to 6 and a beacon station for generating a reference signal to be transmitted to the antenna system.

8. A satellite system according to claim 7, wherein the beacon station is located at a fixed position on the earth's surface.

9. A method of controlling an antenna array having a plurality of antenna elements for transmitting and receiving communication signals, to compensate for displacement of the antenna elements from their nominal positions, comprising the steps of:
determining a characteristic of a reference signal received at at least one of the plurality of antenna elements from a remote source; and
controlling the array in dependence on said characteristic.

10. A method according to claim 9, comprising determining the characteristic of the signal at a first antenna element by comparing the signal received at the first antenna element with the signal received at a second antenna element.

11. A method according to claim 10, wherein said characteristic comprises a phase difference between the signal received at the first antenna element and the signal received at the second antenna element.

12. A method according to any one of claims 9 to 11, including the step of generating a compensation signal in response to said characteristic to compensate for displacement of at least one of said antenna elements.

13. A method according to claim 12, wherein said array is a phased array, including the step of generating a phase compensation signal in response to said characteristic.

14. A method of controlling a beam pattern generated by an antenna array having a plurality of antenna elements, comprising comparing the signals received from a remote source at each of the plurality of antenna elements and controlling the beam pattern in dependence on said comparison so as to lock the beam pattern to the remote source.

15. A method according to claim 14, wherein the beam pattern comprises a single spot beam.

16. A method according to claim 14 or 15, wherein the remote source is located at a fixed point on the earth's surface.
